# EUROPEAN PATENT APPLICATION

(11) **EP 2 753 028 A1**
(43) Date of publication of application: **09.07.2014**
(21) Application number: 12837145.7
(22) Date of filing: 29.08.2012
(51) Int. Cl.: H04L 12/70

(54) **METHOD AND APPARATUS FOR SENDING DATA**

(30) Priority: 28.09.2011 CN 201110302159
(71) Applicant: Huawei Technologies Co., Ltd., Shenzhen, Guangdong 518129 (CN)
(72) Inventor: ZHANG, Aiqin, Shenzhen Guangdong 518129 (CN); SHI, Xiaoyan, Shenzhen Guangdong 518129 (CN)
(74) Representative: Lord, Michael
(86) International application number: PCT/CN2012/080693
(87) International publication number: WO 2013/044711

(57) **Abstract**

The present invention provides a data sending method, which includes: setting, by a communication device, a specified differentiated service code point value of to-be-forwarded data, where the differentiated service code point value of the to-be-forwarded data is different from a differentiated service code point value of not-to-be-forwarded data; and sending, by the communication device, the to-be-forwarded data whose specified differentiated service code point value is set, which can guarantee reliable transmission of GBR data delivered by a PDN GW and improve user experience. The present invention further provides a data sending apparatus.

## Description

### CROSS-REFERENCE TO RELATED APPLICATION

This application claims priority to Chinese Patent Application No. 201110302159.5, filed with the Chinese Patent Office on September 28, 2011 and entitled "DATA SENDING METHOD AND APPARATUS", which is incorporated herein reference in its entirety.

### TECHNICAL FIELD

The present invention relates to the field of wireless communications technologies, and in particular, to a data sending method and apparatus.

### BACKGROUND

In an architecture where a fixed network and a mobile network are mixed, a PCRF (Policy and Charging Rules Function, policy and charging rules function) will transfer a QoS (Quality of service, quality of service) parameter (for example, a bandwidth and so on) of a to-be-established bearer to a BPCF (broadband policy control function, broadband policy control function) over an S9a interface, and then the BPCF transfers the QoS parameter obtained from the S9a interface to a BNG (Broadband network gateway, broadband network gateway), and instructs the BNG to perform bandwidth processing on a data stream.

In an S1 handover process, an indirectly switched to-be-forwarded data stream is a to-be-forwarded data stream from a source base station to a target base station, and there is no way to perform QoS control and negotiation on the to-be-forwarded data stream between a mobile network and a fixed network. For a fixed network node BNG, the to-be-forwarded data stream is an unknown stream, however, the stream has a same outer IP stream description characteristic (for example, a same outer layer IP address, or a same DSCP (Differentiated Service Code Point, differentiated service code point) value) as that of another EPC stream normally delivered from a PDN GW (Packet Data Network Gateway, packet data network gateway). Another EPC (Evolved Packet Core, evolved packet core) stream normally delivered from a PDN GW is bound with a certain EPS (Evolved Packet System, evolved packet system) bearer, where establishment of the bearer is controlled by a PCRF. That is to say, the stream is under QoS control in a scenario where a home base station is accessed through a fixed network, and the BNG knows a bandwidth to be allocated to the stream or a stream set.

When much to-be-forwarded data occurs, GBR data originally delivered from a PDN GW may still be impacted and affected, thereby affecting user experience.

### SUMMARY

Embodiments of the present invention provide a data sending method and apparatus, which can guarantee reliable transmission of GBR data delivered by a PDN GW and improve user experience.

According to one aspect, a data sending method is provided, which includes:
setting, by a communication device, a specified differentiated service code point value of to-be-forwarded data, where the differentiated service code point value of the to-be-forwarded data is different from a differentiated service code point value of not-to-be-forwarded data; and
sending, by the communication device, the to-be-forwarded data whose specified differentiated service code point value is set.

According to one aspect, a data sending method is provided, which includes:
receiving, by a communication device, to-be-forwarded data sent by a source base station, where the to-be-forwarded data is set with a differentiated service code point value by the source base station or another network apparatus on a transmission path; and setting, by the communication device, a differentiated service code point value of the to-be-forwarded data according to the received differentiated service code point value of the to-be-forwarded data, and sending the to-be-forwarded data to a target base station; and
receiving, by the communication device, not-to-be-forwarded data delivered by a packet data network gateway, setting a differentiated service code point value of the not-to-be-forwarded data, and sending the not-to-be-forwarded data to a target base station, where
the differentiated service code point value of the to-be-forwarded data is different from the differentiated service code point value of the not-to-be-forwarded data.

According to one aspect, a data sending apparatus is provided, which includes:
a setting unit, configured to set a specified differentiated service code point DSCP value of to-be-forwarded data, where the DSCP value of the to-be-forwarded data is different from a DSCP value of not-to-be-forwarded data; and
a sending unit, configured to send the to-be-forwarded data whose specified differentiated service code point value is set by the setting unit.

According to one aspect, a data sending apparatus is provided, which includes:
a receiving unit, configured to receive to-be-forwarded data sent by a source base station, where the to-be-forwarded data is set with a differentiated service code point value by the source base station or another network apparatus on a transmission path;
a setting unit, configured to set a differentiated service code point value of the to-be-forwarded data according to the differentiated service code point value of the to-be-forwarded data received by the receiving unit; and
a sending unit, configured to send the to-be-forwarded data obtained after setting by the setting unit to a target base station, where
the receiving unit is configured to receive not-to-be-forwarded data delivered by a packet data network gateway;
the setting unit is configured to set a differentiated service code point value of the not-to-be-forwarded data received by the receiving unit;
the sending unit is configured to send the not-to-be-forwarded data obtained after setting by the setting unit to the target base station, where
the differentiated service code point value of the to-be-forwarded data and set by the setting unit is different from the differentiated service code point value of the not-to-be-forwarded data and set by the setting unit.

After the foregoing technical solutions are adopted, because a DSCP value of to-be-forwarded data is set, and the DSCP value of the to-be-forwarded data is different from a DSCP value of not-to-be-forwarded data, in a data sending process, the data sending method and apparatus of the present invention can help a fixed network node, such as a BNG, to identify GBR data which needs to guarantee end-to-end quality of service, thereby avoiding that the to-be-forwarded data and the not-to-be-forwarded data contend for a fixed network resource. Therefore, an influence from the to-be-forwarded data on the not-to-be-forwarded data, that is, data delivered by a PDN GW, can be eliminated. That is to say, reliable transmission of the GBR data delivered by the PDN GW can be guaranteed and user experience can be improved.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of an embodiment of a data sending method of the present invention;
FIG. 2 is a structural block diagram of an embodiment of a data forwarding apparatus of the present invention;
FIG. 3 is a structural block diagram of another embodiment of a data forwarding apparatus of the present invention; and
FIG. 4 is a structural block diagram of another embodiment of a data forwarding apparatus of the present invention.

### DESCRIPTION OF EMBODIMENTS

To make the objectives, technical solutions, and advantages of the present invention more comprehensible, the following further describes the present invention in detail with reference to the accompanying drawings. Apparently, the embodiments described are merely a part rather than all of the embodiments of the present invention. All other embodiments obtained by a person of ordinary skill in the art based on the embodiments of the present invention without creative efforts shall fall within the protection scope of the present invention.

Because an EPC stream normally delivered from a PDN GW has end-to-end QoS grant control, and an indirect to-be-forwarded data stream does not have end-to-end QoS grant control, and belongs to a burst data stream, when much indirect to-be-forwarded data occurs, these indirect to-be-forwarded data streams may perform irrational contention with EPC streams normally delivered from the PDN GW for fixed network resources, and occupy a part of resources, thereby further causing that resources that can be occupied by data streams originally and normally delivered from the PDN GW are reduced. That is to say, data normally delivered from the PDN GW will be impacted and affected. Particularly, in this scenario, the indirect to-be-forwarded data may cause bandwidth contention to not-to-be-forwarded GBR data of a terminal, and may also cause bandwidth contention to not-to-be-forwarded GBR data of another terminal under a same base station, thereby worsening user experience, for example, instant occurrence of mosaic or even interruption of a video.

An SGW (Serving Gateway, serving gateway) does not distinguish indirect to-be-forwarded data and data normally delivered from a PDN GW, but just sets a DSCP value for downlink data according to a QCI (QoS Class Identifier, QoS class identifier) value of a corresponding bearer. Therefore, when much to-be-forwarded data occurs, GBR data originally and normally delivered from the PDN GW may still be impacted and affected, thereby affecting user experience.

In an architecture where a fixed network and a mobile network are mixed, in a process where a UE (User Equipment, user equipment) enters a target cell from an original cell, the UE has a part of to-be-forwarded data which needs to be transferred from a source base station corresponding to the original cell to a target base station corresponding to the target cell, so that the target base station continues to provide a corresponding service for the UE based on the to-be-forwarded data. At the same time, the UE will also receive not-to-be-forwarded data delivered from a PDN GW.

It should be noted that, in this specification, mentioned "not-to-be-forwarded data" refers to GBR data normally delivered from the PDN GW.

The to-be-forwarded data includes indirectly forwarded to-be-forwarded data and directly forwarded to-be-forwarded data, where the directly forwarded to-be-forwarded data refers to to-be-forwarded data directly forwarded by a source base station to a target base station, and the indirectly forwarded to-be-forwarded data refers to to-be-forwarded data not directly forwarded by the source base station to the target base station, but forwarded by at least one intermediate entity on a transmission path to the target base station.

It should also be noted that, to-be-forwarded data mentioned in the following is indirectly forwarded to-be-forwarded data.

It is noted that, if a description similar to A sending ... to B appears, it may refer to A sending to B directly, or it may refer to A sending to C firstly, and then C sending to B. That is to say, it may refer to A sending to B A directly, or sending to B through one or more intermediate entities. Similarly, the same explanation may also be applied to descriptions such as A receiving ... sent by B.

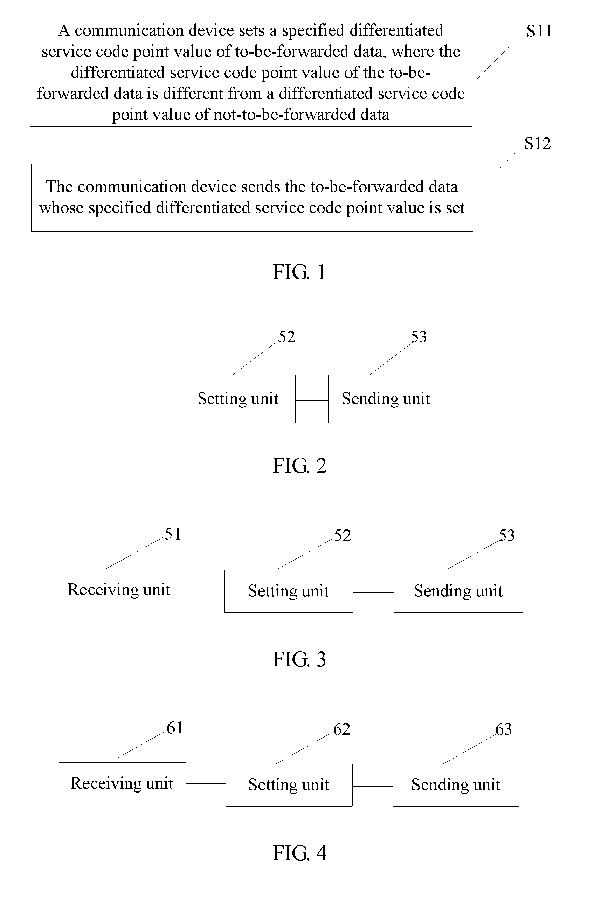

FIG. 1 is a flowchart of an embodiment of a data sending method of the present invention, which, as shown in FIG. 1, includes:

S11: Set a specified differentiated service code point DSCP value of to-be-forwarded data, where the DSCP value of the to-be-forwarded data is different from a DSCP value of not-to-be-forwarded data.

S12: Send the to-be-forwarded data whose specified differentiated service code point value is set.

The setting a specified differentiated service code point DSCP value of to-be-forwarded data includes:
setting the DSCP value of the to-be-forwarded data to a DSCP value corresponding to a non-GBR (non-Guaranteed Bit Rate, non-guaranteed bit rate) bearer; or setting the DSCP value of the to-be-forwarded data to another DSCP value not occupying a GBR bandwidth, where the DSCP value may lead to special processing (for example, bandwidth contention with all other data, not guaranteeing a bandwidth, and so on) performed by a fixed network node on a corresponding data packet; or setting the DSCP value of the to-be-forwarded data to a DSCP value with a lower priority than that of the not-to-be-forwarded data, where a fixed network node corresponding to the DSCP value with a low priority performs low priority processing on these data packets, so that a transmission rate will not be guaranteed, and contention for a fixed network resource with the GBR data will not occur.

Because a DSCP value of to-be-forwarded data is set, and the DSCP value of the to-be-forwarded data is different from a DSCP value of not-to-be-forwarded data, in a data sending process, the data sending method provided by the embodiment of the present invention can help a fixed network node, such as a BNG, to identify GBR data which needs to guarantee end-to-end quality of service, thereby avoiding that the to-be-forwarded data and the not-to-be-forwarded data contend for a fixed network resource. Therefore, an influence from the to-be-forwarded data on the not-to-be-forwarded data, that is, data delivered by a PDN GW, can be eliminated. That is to say, reliable transmission of the GBR data delivered by the PDN GW can be guaranteed and user experience can be improved.

It should be noted that, an executor in the embodiment of the data sending method of the present invention, depending on a specific condition, may be an SGW, a source base station, a home base station, an evolved home base station, or the like, and all the executors fall within the protection scope of the present invention.

An example where the executor is a target SGW is used for description, and this embodiment may include:

The target SGW receives to-be-forwarded data sent by a source base station.

The target SGW distinguishes, according to a difference between a to-be-forwarded data TEID (Tunnel End Point Identifier, tunnel end point identifier) and a not-to-be-forwarded data TEID, to-be-forwarded data and not-to-be-forwarded data over a same EPS bearer. The target SGW sets a specified differentiated service code point DSCP value of to-be-forwarded data, where the DSCP value of the to-be-forwarded data is different from a DSCP value of the not-to-be-forwarded data; for example, the DSCP value of the to-be-forwarded data is set to a DSCP value corresponding to a non-GBR bearer; or the DSCP value of the to-be-forwarded data is set to another DSCP value not occupying a GBR bandwidth, where the DSCP value may lead to special processing (for example, bandwidth contention with all other data, not guaranteeing a bandwidth, and so on) performed by a fixed network node on a corresponding data packet; or the DSCP value of the to-be-forwarded data is set to a DSCP value with a lower priority than that of the not-to-be-forwarded data, where a fixed network node corresponding to the DSCP value with a low priority performs low priority processing on these data packets, so that a transmission rate will not be guaranteed, and contention for a fixed network resource with the GBR data will not occur.

The target SGW sets the DSCP value of the not-to-be-forwarded data according to a quality of service class identifier QCI value of an evolved packet system EPS bearer.

The target SGW receives an indicating identifier sent by the target base station, where the indicating identifier indicates that the target base station is a home base station accessed through a fixed broadband network; and that the target SGW receives an indicating identifier sent by the target base station may specifically be that the target SGW receives a handover request message of the target base station, where the handover request message carries the indicating identifier; or that the target SGW receives a network entry registration message of the target base station, where the registration message carries the indicating identifier.

The target SGW binds the indicating identifier with a forwarding tunnel endpoint identifier TEID or an EPS bearer identifier corresponding to the target base station.

The target SGW sends, according to the set DSCP value of the to-be-forwarded data, the to-be-forwarded data to the home base station accessed through a fixed broadband network.

The target SGW sends, according to the set DSCP value of the not-to-be-forwarded data, the not-to-be-forwarded data to the home base station accessed through a fixed broadband network.

Because a DSCP value of to-be-forwarded data is set, and the DSCP value of the to-be-forwarded data is different from a DSCP value of not-to-be-forwarded data, in a data transmission process, this embodiment can help a fixed network node, such as a BNG, to identify GBR data which needs to guarantee end-to-end quality of service, thereby avoiding that the to-be-forwarded data contend and the not-to-be-forwarded data contend for a fixed network resource. Therefore, reliable transmission of the GBR data delivered by a PDN GW can be guaranteed, an influence from the to-be-forwarded data on the not-to-be-forwarded data can be eliminated, and user experience can be improved. Furthermore, the condition that the target base station is a home base station accessed through a fixed broadband network is identified by an indicating identifier, which is bound with a TEID identifier or an EPS bearer identifier. Therefore, after the to-be-forwarded data is received, exceptional processing of a DSCP value may only be performed specifically to switched to-be-forwarded data whose target base station is a home base station accessed through a fixed broadband network, and the to-be-forwarded data is sent to the target base station, so that special processing of the DSCP value of the to-be-forwarded data is more pertinent. That is to say, for other scenarios where a target base station is a home base station accessed through a non-fixed broadband network, an SGW does not distinguish to-be-forwarded data and not-to-be-forwarded data for user data over a same EPS bearer, but uniformly sets, based on a same rule/method and according to a quality of service class identifier QCI value of an evolved packet system EPS bearer, the DSCP values of the not-to-be-forwarded data and the to-be-forwarded data over a same EPS bearer. In this way, the load of distinguishing processing of the SGW can be reduced, and the quality of service of the to-be-forwarded data is guaranteed in a scenario where the target base station is a home base station accessed through a non-fixed broadband network, and because we usually think that a bandwidth of a backbone network of a mobile network is sufficient, but, as a mobile network borrows fixed network resources to transmit mobile user data, and resources that can be occupied by the mobile network on a fixed network are limited, QoS granting is required.

An example where the executor is a target SGW is used for description, and this embodiment may include:

The target SGW receives to-be-forwarded data sent by a source base station, where the to-be-forwarded data is set with a DSCP value by the source base station or another network apparatus on a transmission path, sets, according to the received differentiated service code point value of the to-be-forwarded data, a differentiated service code point value of the to-be-forwarded data to be equal to the received differentiated service code point value of the to-be-forwarded data, and sends the to-be-forwarded data to a target base station, where the DSCP value of the to-be-forwarded data is set to a DSCP value corresponding to a non-GBR bearer, or the DSCP value of the to-be-forwarded data is set to another DSCP value not occupying a GBR bandwidth, where the DSCP value may lead to special processing (for example, and bandwidth contention with all other data, not guaranteeing a bandwidth, and so on) performed by a fixed network node on a corresponding data packet; or the DSCP value of the to-be-forwarded data is set to a DSCP value with a lower priority than that of the not-to-be-forwarded data, and a fixed network node corresponding to the DSCP value with a low priority performs low priority processing on these data packets, so that a transmission rate will not be guaranteed, and contention for a fixed network resource with the GBR data will not occur.

The target SGW receives not-to-be-forwarded data delivered by a packet data network gateway PDN GW, where the DSCP value of the to-be-forwarded data is different from a DSCP value of the not-to-be-forwarded data.

The target SGW sets the DSCP value of the not-to-be-forwarded data according to a QCI value of an evolved packet system EPS bearer.

The target SGW receives an indicating identifier sent by the target base station, where the indicating identifier indicates that the target base station is a home base station accessed through a fixed broadband network; and that the target SGW receives an indicating identifier sent by the target base station may specifically be that the target SGW receives a handover request message of the target base station, where the handover request message carries the indicating identifier; or that the target SGW receives a network entry registration message of the target base station, where the registration message carries the indicating identifier.

The target SGW binds the indicating identifier with a forwarding tunnel endpoint identifier TEID or an EPS bearer identifier corresponding to the target base station. In this way, special DSCP value processing can be performed only on to-be-forwarded data in a scenario where the target base station is a home base station accessed through a fixed broadband network, and the to-be-forwarded data is sent to the home base station, thereby avoiding that the target base station performs special processing on switched to-be-forwarded data in a macro-station scenario, so that the special processing of the to-be-forwarded data is more pertinent. The load of distinguishing processing of the SGW is reduced, and the quality of service of the to-be-forwarded data is guaranteed in a scenario where the target base station is a home base station accessed through a non-fixed broadband network.

The target SGW sends, according to the set DSCP value of the to-be-forwarded data, the to-be-forwarded data to the home base station accessed through a fixed broadband network.

The target SGW sends, according to the set DSCP value of the not-to-be-forwarded data, the not-to-be-forwarded data to the home base station accessed through a fixed broadband network.

In this embodiment, because a DSCP value of to-be-forwarded data is set, and the DSCP value of the to-be-forwarded data is different from a DSCP value of not-to-be-forwarded data, in a data sending process, the to-be-forwarded data and the not-to-be-forwarded data can be distinguished, and it is guaranteed that the to-be-forwarded data does not contend for a resource with the not-to-be-forwarded data. Therefore, an influence from the to-be-forwarded data on the not-to-be-forwarded data can be eliminated, and reliable transmission of GBR data delivered by a PDN GW can be guaranteed, thereby improving user experience. Furthermore, the condition that the target base station is a home base station accessed through a fixed broadband network is identified by an indicating identifier, which is bound with a TEID identifier or an EPS bearer identifier. Therefore, after the to-be-forwarded data is received, special DSCP value processing can be performed only on to-be-forwarded data in a scenario where the target base station is a home base station accessed through a fixed broadband network, and the to-be-forwarded data is sent to the home base station, thereby avoiding that the target base station performs special processing on switched to-be-forwarded data in a macro-station scenario, so that the special processing of the to-be-forwarded data is more pertinent. The load of distinguishing processing of the SGW is reduced, and the quality of service of the to-be-forwarded data is guaranteed in a scenario where the target base station is a home base station accessed through a non-fixed broadband network.

To better understand the present invention, some specific embodiments are used as examples to further describe the present invention. It should also be noted that, the following listed embodiments are only a part of the embodiments of the present invention, and a person skilled in the art can easily think of other embodiments according to the content of the present invention, which all fall within the protection scope of the present invention.

Another embodiment provided by the present invention includes:

When a source base station forwards indirectly forwarded to-be-forwarded data in a handover process to a target base station, the source base station sends the to-be-forwarded data to a source serving gateway, and continues to send the data to a target serving gateway. The target SGW performs special processing on the to-be-forwarded data, so that a DSCP value of the to-be-forwarded data is different from a DSCP value of not-to-be-forwarded data, and the indirectly forwarded to-be-forwarded data does not contend for a resource with not-to-be-forwarded data delivered by a packet data network gateway.

The special processing includes: the target SGW sets a DSCP value of to-be-forwarded data from a forwarding tunnel to a DSCP value corresponding to a non-GBR bearer, or sets the DSCP value of the to-be-forwarded data to another DSCP value not occupying a GBR bandwidth, where the DSCP value may lead to special processing (for example, and bandwidth contention with all other data, not guaranteeing a bandwidth, and so on) performed by a fixed network node on a corresponding data packet; or sets the DSCP value of the to-be-forwarded data is to a DSCP value with a lower priority than that of the not-to-be-forwarded data, and a fixed network node corresponding to the DSCP value with a low priority performs low priority processing on these data packets, so that a transmission rate will not be guaranteed, and contention for a fixed network resource with the GBR data will not occur.

The target SGW processes downlink user plane data by using a normal mechanism. That is to say, the DSCP value of the not-to-be-forwarded data is set according to a quality of service class identifier QCI value of an evolved packet system EPS bearer.

After the processing is completed, the target SGW delivers, according to the set DSCP value of the to-be-forwarded data, the processed to-be-forwarded data to the target base station, and further sends the data to a user terminal. In addition, the target SGW sends, according to the set DSCP value of the not-to-be-forwarded data, the not-to-be-forwarded data to a home base station accessed through a fixed broadband network.

After the above method is adopted, for to-be-forwarded downlink data delivered from an SGW, its DSCP value that enters a fixed network is always a DSCP value of a non-GBR attribute. When a fixed network node processes QoS bandwidth control, the to-be-forwarded data does not affect a downlink GBR data stream of a terminal under a same home base station, thereby guaranteeing reliable transmission of GBR data delivered by a PDN GW, so that a problem such as mosaic or interruption of a video will not occur on a user terminal, and user experience is obviously improved.

Another embodiment provided by the present invention includes:

When a source base station starts to forward to-be-forwarded data in a handover process to a target base station, the source base station may first perform special processing on the to-be-forwarded data.

The special processing include: the source base station sets the DSCP value of the to-be-forwarded data to a DSCP value corresponding to a non-GBR bearer or sets the DSCP value of the to-be-forwarded data to a DSCP value not occupying a GBR bandwidth. For example, the DSCP value is 6, 7, 8 or 9, or the source base station sets the DSCP value of the to-be-forwarded data to a differentiated service code point value with a lower processing priority than that of the not-to-be-forwarded data.

The target SGW processes downlink user plane data by using a normal mechanism. That is to say, the DSCP value of the not-to-be-forwarded data is set according to a quality of service class identifier QCI value of an evolved packet system EPS bearer.

After the processing is completed, the source base station sends the processed to-be-forwarded data a source SGW, and when the source SGW receives to-be-forwarded data from an indirect forwarding tunnel, the source SGW directly reserves a DSCP value of a data packet received from the source base station and transmits to the target SGW The target SGW follows a DSCP identifier of the packet received by the source SGW, and does not reset a DSCP value of an IP packet, but sets the differentiated service code point value of the to-be-forwarded data to be equal to the received differentiated service code point value of the to-be-forwarded data. Meanwhile, the target SGW performs normal processing on not-to-be-forwarded downlink user plane data, that is, obtains a DSCP value from a QCI value of a bearer context, and packages its IP header. In the case of an S1 handover without SGW re-positioning, which means that the target SGW and the source SGW are the same, the source SGW performs processing, that is, follows the foregoing processing of the source base station, and does reset the DSCP value of the to-be-forwarded data. In addition, the target SGW performs normal processing on the not-to-be-forwarded downlink user plane data, that is, obtains the DSCP value from the QCI value of the bearer context, packages the IP header, and sets the DSCP value of the IP packet.

After the processing is completed, the target SGW delivers, according to the set DSCP value of the to-be-forwarded data, the processed to-be-forwarded data to the target base station, and further sends the data to a user terminal. In addition, the target SGW sends, according to the set DSCP value of the not-to-be-forwarded data, the not-to-be-forwarded data to a target base station, and further sends the data to the user terminal.

After the foregoing method is adopted, the to-be-forwarded data and the not-to-be-forwarded data are processed differently. For to-be-forwarded downlink data delivered from an SGW, its DSCP value that enters a fixed network is always a DSCP value of a non-GBR attribute. When a fixed network node processes QoS bandwidth control, the to-be-forwarded data does not affect a downlink GBR data stream of a terminal under a same home base station, thereby guaranteeing reliable transmission of GBR data delivered by a PDN GW, so that a problem such as mosaic or interruption of a video will not occur on a user terminal, and user experience is obviously improved.

Another embodiment provided by the present invention includes:

Before a source base station starts to forward to-be-forwarded data in a handover process to a target base station, the source base station needs to send a handover request to a source MME, and indicates in the handover request that which bearer needs to perform data forwarding during the handover. Then the source MME sends the handover request to a target MME, and the target MME sends it to the target base station.

In this embodiment, in a condition that the target base station knows that it is a home base station accessed through a broadband, the target base station sends an indicator (indicator) to the target MME in a handover request recovery message, where the indicator indicates that the target base station is a home base station and is accessed through a broadband.

After the target MME receives the message, the target MME sends the indicator to the target SGW in an indirect forwarding data tunnel establishment request message. In this way, the target SGW can bind the indicator with a corresponding forwarding TEID identifier and an EPS bearer identifier.

When the source base station starts to forward indirectly forwarded to-be-forwarded data in a handover process to the target base station, the source base station sends the indirectly forwarded to-be-forwarded data to the source serving gateway, and continues to send it to the target SGW

After the target SGW receives the to-be-forwarded data sent by the source base station, it distinguishes whether the target base station is a home base station accessed through a broadband or another base station. If a target is a to-be-forwarded data stream corresponding to a home base station accessed through a broadband, special processing is performed on the to-be-forwarded data stream, so that a DSCP value of the indirectly forwarded to-be-forwarded data is different from a DSCP value of not-to-be-forwarded data, and that the indirectly forwarded to-be-forwarded data does not contend for a resource with the not-to-be-forwarded data delivered by a packet data network gateway.

The special processing includes: the target SGW sets the DSCP value of the to-be-forwarded data from the forwarding tunnel to a DSCP value corresponding to a non-GBR bearer or sets the DSCP value of the to-be-forwarded data to a DSCP value not occupying a GBR bandwidth. For example, the DSCP value is 6, 7, 8 or 9, or the DSCP value of the to-be-forwarded data is set to a differentiated service code point value with a lower processing priority than that of the not-to-be-forwarded data.

The target SGW processes downlink user plane data by using a normal mechanism. That is to say, the DSCP value of the not-to-be-forwarded data is set according to a quality of service class identifier QCI value of an evolved packet system EPS bearer.

After the processing is completed, the target SGW delivers, according to the set DSCP value of the to-be-forwarded data, the processed to-be-forwarded data to the target base station, and further sends the data to a user terminal. At the same time, the target SGW sends, according to the set DSCP value of the not-to-be-forwarded data, the not-to-be-forwarded data to the target base station, and further sends the data to the user terminal.

After the above method is adopted, for to-be-forwarded downlink data delivered from an SGW, its DSCP value that enters a fixed network is always a DSCP value of a non-GBR attribute. When a fixed network node processes QoS bandwidth control, the to-be-forwarded data does not affect a downlink GBR data stream of a terminal under a same home base station, thereby guaranteeing reliable transmission of GBR data delivered by a PDN GW, so that a problem such as mosaic or interruption of a video will not occur on a user terminal, and user experience is obviously improved.

Another embodiment provided by the present invention includes:

In a process where a source base station forwards to-be-forwarded data in a handover process to a target base station, when user plane data is terminated at a target HeNB GW or HNB GW, that is, when the target HeNB GW or HNB GW needs to complete GTP interworking between two ends for all user plane data, in an indirect data forwarding tunnel establishment process, the HeNB GW can distinguish a TEID corresponding to to-be-forwarded data and a TEID corresponding to downlink user plane data. Therefore, the HeNB GW may perform further special processing on the DSCP value of the to-be-forwarded data.

The special processing includes: the HeNB GW sets the DSCP value of the to-be-forwarded data from the forwarding tunnel to a DSCP value corresponding to a non-GBR bearer or sets the DSCP value of the to-be-forwarded data to a DSCP value not occupying a GBR bandwidth. For example, the DSCP value is 6, 7, 8 or 9, or the DSCP value of the to-be-forwarded data is set to a differentiated service code point value with a lower processing priority than that of the not-to-be-forwarded data.

The HeNB GW processes downlink user plane data by using a normal mechanism. That is to say, the DSCP value of the not-to-be-forwarded data is set according to a quality of service class identifier QCI value of an evolved packet system EPS bearer.

It should be noted that, the foregoing embodiment only describes an HeNB access scenario. For an HNB access scenario, the procedure is similar with a gateway performing special processing on a DSCP being an HNB GW, which is not further described herein.

After the above method is adopted, for to-be-forwarded downlink data delivered from an SGW, its DSCP value that enters a fixed network is always a DSCP value of a non-GBR attribute. When a fixed network node processes QoS bandwidth control, the to-be-forwarded data does not affect a downlink GBR data stream of a terminal under a same home base station, thereby guaranteeing reliable transmission of GBR data delivered by a PDN GW, so that a problem such as mosaic or interruption of a video will not occur on a user terminal, and user experience is obviously improved.

Another embodiment provided by the present invention includes:

In the solution of the foregoing embodiment, the indicator is an indicator sent to the MME by the target base station in a handover reply message, which is sent to the MME in a UE-related message. In fact, because the indicator is an access attribute of a base station, indicating that the home base station is accessed to an EPC network through a broadband. The attribute is determined when the home base station enters the network, and the attribute is independent of an access process of a terminal under the home base station. Therefore, in this embodiment, the indicator may be implemented by using a network entry process of an HeNB.

In this embodiment, when the home base station is powered on and enters the network, the following three steps are performed.

Step 1: The home base station obtains an IP address allocated by a fixed network.

Step 2: The home base station interacts with a security gateway, and establishes a security tunnel between the home base station and the fixed network.

Step 3: The home base station registers with an HNB GW. In the registration process, the home base station sends, to the HNB GW, an indicator indicating that the home base station is accessed through the fixed network. The indicator is bound with an S1 SCTP link between the home base station and the HNB GW Through the process, the HNB GW/HeNB GW learns that the SCTP link is about broadband access of the home base station. The HNB GW/HeNB GW/MME binds the indicator with S1 SCTP link and stores it.

After the home base station is powered on, the H(e)NB GW/MME stores a binding relationship between an SCTP link ID and the foregoing indicator.

An indicator reported in a registration message when the target base station is powered on and enters the network is received, where the indicator indicates that the target base station is a home base station accessed through a fixed broadband network.

The indicator is bound with the SCTP link ID and stored.

After the handover request reply message is received, whether the SCTP link where the handover request reply message is located corresponds to a stored SCTP link identifier is determined.

When the SCTP link where the handover request reply message is located corresponds to the stored SCTP link identifier, the indicator is bound with a corresponding forwarding TEID identifier or EPS bearer identifier, so that, when a target of the indirectly forwarded to-be-forwarded data is the home base station accessed through a fixed broadband network, the indirectly forwarded to-be-forwarded data is only sent to the home base station accessed through a fixed broadband network.

When S1 is handed over to the target home base station and after the MME receives a handover request reply, the MME compares the stored SCTP link identifier and an SCTP link identifier where the handover reply message is located. If the forgoing indicator corresponds to the SCTP link where the handover reply message is located, the MME further carries the indicator to the target SGW in an indirect forwarding data tunnel establishment request. The target SGW binds the indicator with an uplink data forwarding TEID generated by the target base station.

After the target SGW receives the to-be-forwarded data, special processing of a special DSCP value is performed on the to-be-forwarded data. The special processing includes: the source SGW sets the DSCP value of the to-be-forwarded data from a forwarding tunnel to a DSCP value corresponding to a non-GBR bearer or sets the DSCP value of the to-be-forwarded data to a DSCP value not occupying a GBR bandwidth. For example, the DSCP value is 6, 7, 8 or 9, or the source SGW sets the DSCP value of the to-be-forwarded data to a differentiated service code point value with a lower processing priority than that of the not-to-be-forwarded data.

The target SGW processes downlink user plane data by using a normal mechanism. That is to say, the DSCP value of the not-to-be-forwarded data is set according to a quality of service class identifier QCI value of an evolved packet system EPS bearer.

After the processing is completed, the target SGW delivers the processed to-be-forwarded data only to a home base station accessed through a fixed network, and further transfers the data to a corresponding user terminal under the home base station.

After the above method is adopted, for to-be-forwarded downlink data delivered from an SGW, its DSCP value that enters a fixed network is always a DSCP value of a non-GBR attribute. When a fixed network node processes QoS bandwidth control, the to-be-forwarded data does not affect a downlink GBR data stream of a terminal under a same home base station, thereby guaranteeing reliable transmission of GBR data delivered by a PDN GW, so that a problem such as mosaic or interruption of a video will not occur on a user terminal, and user experience is obviously improved.

Corresponding to the data sending method of the present invention, the present invention further provides a data sending apparatus, which, as shown in FIG. 2, includes:
a setting unit 52, configured to set a specified differentiated service code point DSCP value of to-be-forwarded data, where the DSCP value of the to-be-forwarded data is different from a DSCP value of not-to-be-forwarded data; and
a sending unit 53, configured to send the to-be-forwarded data whose specified differentiated service code point value is set by the setting unit.

After the foregoing technical solutions are adopted, because a DSCP value of to-be-forwarded data is set, and the DSCP value of the to-be-forwarded data is different from a DSCP value of not-to-be-forwarded data, in a data sending process, the data sending method and apparatus of the present invention can help a fixed network node, such as a BNG, to identify GBR data which needs to guarantee end-to-end quality of service, thereby avoiding that to-be-forwarded data and not-to-be-forwarded data contend for a fixed network resource. Therefore, an influence from the to-be-forwarded data on the not-to-be-forwarded data, that is, data delivered by a PDN GW, can be eliminated. That is to say, reliable transmission of GBR data delivered by the PDN GW can be guaranteed and user experience can be improved.

Another apparatus embodiment provided by the present invention is similar to the embodiment shown in FIG. 2, and this embodiment includes:

The setting unit 52 is specifically configured to:
set the DSCP value of the to-be-forwarded data to a DSCP value corresponding to a non-GBR bearer; or set the DSCP value of the to-be-forwarded data to a DSCP value not occupying a GBR bandwidth; or set the DSCP value of the to-be-forwarded data to a differentiated service code point value with a lower processing priority than that of the not-to-be-forwarded data.

In an embodiment of the present invention, optionally, as shown in FIG. 3, the apparatus further includes: a receiving unit 51, configured to receive the to-be-forwarded data sent by a source base station; and
the sending unit 53 is specifically configured to send the not-to-be-forwarded data to a target base station according to the DSCP value of the not-to-be-forwarded data.

Further, the receiving unit 51 is further configured to receive not-to-be-forwarded data delivered by a packet data network gateway;
the setting unit 52 is further configured to set the DSCP value of the not-to-be-forwarded data according to a quality of service class identifier QCI value of an evolved packet system EPS bearer; and
the sending unit 53 is further configured to send, according to the DSCP value of the not-to-be-forwarded data and set by the setting unit 52, the not-to-be-forwarded data received by the receiving unit 51 to the target base station.

Furthermore, the receiving unit 51 is further configured to receive an indicating identifier sent by the target base station, where the indicating identifier indicates that the target base station is a home base station accessed through a fixed broadband network;
the setting unit 52 is further configured to bind the indicating identifier received by the receiving unit 51 with a forwarding tunnel endpoint identifier TEID or an EPS bearer identifier corresponding to the target base station; and
the sending unit 53 specifically configured to send the to-be-forwarded data to the home base station accessed through a fixed broadband network.

Further, the receiving unit 51 is specifically configured to:
receive a handover request message of the target base station, where the handover request message carries the indicating identifier; or
receive a network entry registration message of the target base station, where the registration message carries the indicating identifier.

Corresponding to the data sending method of the present invention, the present invention further provides a data sending apparatus, which, as is shown in FIG. 4, includes:
a receiving unit 61, configured to receive to-be-forwarded data sent by a source base station, where the to-be-forwarded data is set with a DSCP value by the source base station or another network apparatus on a transmission path, and receive not-to-be-forwarded data delivered by a packet data network gateway PDN GW;
a setting unit 62, configured to set a DSCP value of the to-be-forwarded data according to the DSCP value of the to-be-forwarded data received by the receiving unit 61; and
a sending unit 63, configured to send the to-be-forwarded data to a target base station according to the DSCP value of the received to-be-forwarded data; and send the not-to-be-forwarded data obtained after setting by the setting unit to the target base station.

The DSCP value of the to-be-forwarded data and set by the setting unit is different from the DSCP value of the not-to-be-forwarded data and set by the setting unit.

The setting unit 62 is specifically configured to set the DSCP value of the to-be-forwarded data received by the receiving unit 61 to a DSCP value corresponding to a non-GBR bearer; or set the DSCP value of the to-be-forwarded data received by the receiving unit 61 to a DSCP value not occupying a GBR bandwidth; or set the DSCP value of the to-be-forwarded data received by the receiving unit 61 to a differentiated service code point value with a lower processing priority than that of the not-to-be-forwarded data.

The setting unit 62 is specifically configured to set the differentiated service code point value of the to-be-forwarded data received by the receiving unit 61 to be equal to the differentiated service code point value of the to-be-forwarded data received by the receiving unit 61.

In an embodiment of the present invention, optionally, the setting unit 62 is further configured to set the DSCP value of the not-to-be-forwarded data according to a quality of service class identifier QCI value of an evolved packet system EPS bearer; and
the sending unit 63 is specifically configured to:
send the not-to-be-forwarded data to the target base station according to the DSCP value of the not-to-be-forwarded data and set by the setting unit 62.

Further, the receiving unit 61 is further configured to receive an indicating identifier sent by the target base station, where the indicating identifier indicates that the target base station is a home base station accessed through a fixed broadband network;
the setting unit 62 is further configured to bind the indicating identifier received by the receiving unit 61 with a forwarding tunnel endpoint identifier TEID or an EPS bearer identifier corresponding to the target base station; and the sending unit 63 is specifically configured to:
send, according to the bound identifier set by the setting unit, the to-be-forwarded data to the home base station accessed through a fixed broadband network.

Further, the receiving unit 62 is specifically configured to:
receive a handover request message of the target base station, where the handover request message carries the indicator indicating that the target base station is a home base station accessed through a fixed broadband network; or
receive a network entry registration message of the target base station, where the registration message carries the indicator indicating that the target base station is a home base station accessed through a fixed broadband network.

After the foregoing technical solutions are adopted, because a DSCP value of to-be-forwarded data is set, and the DSCP value of the to-be-forwarded data is different from a DSCP value of not-to-be-forwarded data, in a data sending process, the data sending method and apparatus of the present invention can help a fixed network node, such as a BNG, to identify GBR data which needs to guarantee end-to-end quality of service, thereby avoiding that the to-be-forwarded data and the not-to-be-forwarded data contend for a fixed network resource. Therefore, an influence from the to-be-forwarded data on the not-to-be-forwarded data, that is, data delivered by a PDN GW, can be eliminated. That is to say, reliable transmission of GBR data delivered by the PDN GW can be guaranteed and user experience can be improved.

It should be noted that, in the foregoing user equipment and base station embodiments, the included units are only divided logically according to functions, but are not limited to the foregoing division as long as corresponding functions can be implemented. In addition, specific names of the function units are only for mutual distinction, and not used to limit the protection scope of the present invention.

A Person of ordinary skill in the art can understand that all or a part of the steps of the methods in the embodiments may be implemented by a program instructing relevant hardware. The program may be stored in a computer readable storage medium. The storage medium may be a read-only memory, a magnetic disk, an optical disc, or the like.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data sending method, comprising:
setting, by a communication device, a specified differentiated service code point value of to-be-forwarded data, wherein the differentiated service code point value of the to-be-forwarded data is different from a differentiated service code point value of not-to-be-forwarded data; and
sending, by the communication device, the to-be-forwarded data whose specified differentiated service code point value is set.

2. The method according to claim 1, the setting, by a communication device, a specified differentiated service code point value of to-be-forwarded data comprises:
setting, by the communication device, the differentiated service code point value of the to-be-forwarded data to a differentiated service code point value corresponding to a non-guaranteed bit rate bearer; or
setting, by the communication device, the differentiated service code point value of the to-be-forwarded data to a differentiated service code point value not occupying a guaranteed bit rate bandwidth; or
setting, by the communication device, the differentiated service code point value of the to-be-forwarded data to a differentiated service code point value with a lower processing priority than that of the not-to-be-forwarded data.

3. The method according to claim 1 or 2, wherein the communication device is one of a serving gateway, a home gateway, and an evolved home gateway, and before the setting, by a communication device, a specified differentiated service code point value of to-be-forwarded data, the method further comprises:
receiving, by the communication device, the to-be-forwarded data sent by a source base station; and
the sending, by the communication device, the to-be-forwarded data whose specified differentiated service code point value is set comprises:
sending, by the communication device, the to-be-forwarded data to a target base station according to the differentiated service code point value of the to-be-forwarded data.

4. The method according to claim 3, wherein the method further comprises:
receiving, by the communication device, not-to-be-forwarded data delivered by a packet data network gateway;
setting, by the communication device, the differentiated service code point value of the not-to-be-forwarded data according to a quality of service class identifier value of an evolved packet system bearer; and
sending, by the communication device, the not-to-be-forwarded data to the target base station according to the set differentiated service code point value of the not-to-be-forwarded data.

5. The method according to claim 3, wherein before the sending the to-be-forwarded data to a target base station, the method further comprises:
receiving, by the communication device, an indicating identifier sent by the target base station, wherein the indicating identifier indicates that the target base station is a home base station accessed through a fixed broadband network; and
binding, by the communication device, the indicating identifier with a forwarding tunnel end point request identifier or an evolved packet system bearer identifier corresponding to the target base station; and
the sending, by the communication device, the to-be-forwarded data to a target base station comprises:
sending, by the communication device, the to-be-forwarded data to the home base station accessed through a fixed broadband network.

6. The method according to claim 5, wherein the receiving an identifier indicating that the target base station is a home base station accessed through a fixed broadband network comprises:
receiving a handover request message of the target base station, wherein the handover request message carries the indicating identifier; or
receiving a network entry registration message of the target base station, wherein the registration message carries the indicating identifier.

7. A data sending method, comprising:
receiving, by a communication device, to-be-forwarded data sent by a source base station, wherein the to-be-forwarded data is set with a differentiated service code point value by the source base station or another network apparatus on a transmission path; and setting, by the communication device, a differentiated service code point value of the to-be-forwarded data according to the received differentiated service code point value of the to-be-forwarded data, and sending the to-be-forwarded data to a target base station; and
receiving, by the communication device, not-to-be-forwarded data delivered by a packet data network gateway, setting a differentiated service code point value of the not-to-be-forwarded data, and sending the not-to-be-forwarded data to a target base station, wherein
the differentiated service code point value of the to-be-forwarded data is different from the differentiated service code point value of the not-to-be-forwarded data.

8. The method according to claim 7, wherein the differentiated service code point value of the to-be-forwarded data is set to a differentiated service code point value corresponding to a non-guaranteed bit rate bearer, or a differentiated service code point value not occupying a guaranteed bit rate bandwidth, or a differentiated service code point value with a lower processing priority than that of the not-to-be-forwarded data.

9. The method according to claim 7, the setting, by the communication device, a differentiated service code point value of the to-be-forwarded data according to the received differentiated service code point value of the to-be-forwarded data comprises:
setting, by the communication device, the differentiated service code point value of the to-be-forwarded data to be equal to the received differentiated service code point value of the to-be-forwarded data.

10. The method according to claim 7 or 8, wherein, before the sending, by the communication device, the not-to-be-forwarded data to a target base station, the method further comprises:
setting, by the communication device, the differentiated service code point value of the not-to-be-forwarded data according to a quality of service class identifier value of an evolved packet system bearer; and
the sending, by the communication device, the not-to-be-forwarded data to a target base station according to the differentiated service code point value of the not-to-be-forwarded data comprises:
sending, by the communication device, the not-to-be-forwarded data to the target base station according to the set differentiated service code point value of the not-to-be-forwarded data.

11. The method according to claim 10, wherein before the sending, by the communication device, the to-be-forwarded data to a target base station, the method further comprises:
receiving, by the communication device, an indicating identifier sent by the target base station, wherein the indicating identifier indicates that the target base station is a home base station accessed through a fixed broadband network; and
binding, by the communication device, the indicating identifier with a forwarding tunnel end point request identifier or an evolved packet system bearer identifier corresponding to the target base station; and
the sending, by the communication device, the to-be-forwarded data to a target base station comprises:
sending, by the communication device according to the bound identifier, the to-be-forwarded data to the home base station accessed through a fixed broadband network.

12. The method according to claim 11, wherein the receiving an indicating identifier sent by the target base station, wherein the indicating identifier indicates that the target base station is a home base station accessed through a fixed broadband network comprises:
receiving, by the communication device, a handover request message of the target base station, wherein the handover request message carries the indicator indicating that the target base station is a home base station accessed through a fixed broadband network; or
receiving, by the communication device, a network entry registration message of the target base station, wherein the registration message carries the indicator indicating that the target base station is a home base station accessed through a fixed broadband network.

13. The method according to any one of claims 7 to 12, wherein the communication device is one of a serving gateway, a home gateway, and an evolved home gateway.

14. A data sending apparatus, comprising:
a setting unit, configured to set a specified differentiated service code point value of to-be-forwarded data, wherein the differentiated service code point value of the to-be-forwarded data is different from a differentiated service code point value of not-to-be-forwarded data; and
a sending unit, configured to send the to-be-forwarded data whose specified differentiated service code point value is set by the setting unit.

15. The apparatus according to claim 14, wherein the setting unit is specifically configured to:
set the differentiated service code point value of the to-be-forwarded data to a differentiated service code point value corresponding to a non-guaranteed bit rate bearer; or
set the differentiated service code point value of the to-be-forwarded data to a differentiated service code point value not occupying a guaranteed bit rate bandwidth; or
set the differentiated service code point value of the to-be-forwarded data to a differentiated service code point value with a lower processing priority than that of the not-to-be-forwarded data.

16. The apparatus according to claim 14 or 15, wherein the apparatus further comprises:
a receiving unit, configured to receive the to-be-forwarded data sent by a source base station; and
the sending unit is specifically configured to:
send, according to the differentiated service code point value of the to-be-forwarded data, the to-be-forwarded data received by the receiving unit to a target base station.

17. The apparatus according to claim 16, further comprising:
the receiving unit is further configured to receive not-to-be-forwarded data delivered by a packet data network gateway;
the setting unit is further configured to set, according to a quality of service class identifier value of an evolved packet system bearer, the differentiated service code point value of the not-to-be-forwarded data received by the receiving unit; and
the sending unit is further configured to send the not-to-be-forwarded data to the target base station according to the differentiated service code point value of the not-to-be-forwarded data and set by the setting unit.

18. The apparatus according to claim 16, wherein,
the receiving unit is further configured to receive an indicating identifier sent by the target base station, wherein the indicating identifier indicates that the target base station is a home base station accessed through a fixed broadband network;
the setting unit is further configured to bind the indicating identifier received by the receiving unit with a forwarding tunnel end point request identifier or an evolved packet system bearer identifier corresponding to the target base station; and
the sending unit is specifically configured to:
send the to-be-forwarded data received by the receiving unit to the home base station accessed through a fixed broadband network.

19. The apparatus according to claim 17, wherein the receiving unit is specifically configured to:
receive a handover request message of the target base station, wherein the handover request message carries the indicating identifier; or
receive a network entry registration message of the target base station, wherein the registration message carries the indicating identifier.

20. A data sending apparatus, comprising:
a receiving unit, configured to receive to-be-forwarded data sent by a source base station, wherein the to-be-forwarded data is set with a differentiated service code point value by the source base station or another network apparatus on a transmission path;
a setting unit, configured to set a differentiated service code point value of the to-be-forwarded data according to the differentiated service code point value of the to-be-forwarded data received by the receiving unit; and
a sending unit, configured to send the to-be-forwarded data obtained after setting by the setting unit to a target base station, wherein
the receiving unit is configured to receive not-to-be-forwarded data delivered by a packet data network gateway;
the setting unit is configured to set a differentiated service code point value of the not-to-be-forwarded data received by the receiving unit;
the sending unit is configured to send the not-to-be-forwarded data obtained after setting by the setting unit to the target base station, wherein
the differentiated service code point value of the to-be-forwarded data and set by the setting unit is different from the differentiated service code point value of the not-to-be-forwarded data and set by the setting unit.

21. The apparatus according to claim 20, wherein the setting unit is specifically configured to:
set the differentiated service code point value of the to-be-forwarded data received by the receiving unit to a differentiated service code point value corresponding to a non-guaranteed bit rate bearer; or
set the differentiated service code point value of the to-be-forwarded data received by the receiving unit to a differentiated service code point value not occupying a guaranteed bit rate bandwidth; or
set the differentiated service code point value of the to-be-forwarded data received by the receiving unit to a differentiated service code point value with a lower processing priority than that of the not-to-be-forwarded data.

22. The apparatus according to claim 20, wherein the setting unit is specifically configured to:
set the differentiated service code point value of the to-be-forwarded data received by the receiving unit to be equal to the differentiated service code point value of the to-be-forwarded data received by the receiving unit.

23. The apparatus according to claim 20 or 21, wherein,
the setting unit is further configured to set the differentiated service code point value of the not-to-be-forwarded data according to a quality of service class identifier value of an evolved packet system bearer; and
the sending unit is specifically configured to:
send the not-to-be-forwarded data to the target base station according to the differentiated service code point value of the not-to-be-forwarded data and set by the setting unit.

24. The apparatus according to claim 23, wherein,
the receiving unit is further configured to receive an indicating identifier sent by the target base station, wherein the indicating identifier indicates that the target base station is a home base station accessed through a fixed broadband network;
the setting unit is further configured to bind the indicating identifier received by the receiving unit with a forwarding tunnel end point request identifier or an evolved packet system bearer identifier corresponding to the target base station; and
the sending unit is specifically configured to:
send, according to the bound identifier set by the setting unit, the to-be-forwarded data to the home base station accessed through a fixed broadband network.

25. The apparatus according to claim 24, wherein the receiving unit is specifically configured to:
receive a handover request message of the target base station, wherein the handover request message carries the indicator indicating that the target base station is a home base station accessed through a fixed broadband network; or
receive a network entry registration message of the target base station, wherein the registration message carries the indicator indicating that the target base station is a home base station accessed through a fixed broadband network.
